# EUROPÄISCHE PATENTSCHRIFT

(11) **EP 2 681 077 B1**
(45) Veröffentlichungstag und Bekanntmachung des Hinweises auf die Patenterteilung: **30.10.2019**
(21) Anmeldenummer: 12710656.5
(22) Anmeldetag: 01.03.2012
(51) Int. Cl.: B60Q 1/12

(54) **VERFAHREN UND VORRICHTUNG ZUM EINSTELLEN EINER ABSTRAHLRICHTUNG EINES SCHEINWERFERS SOWIE KRAFTWAGEN**
METHOD AND DEVICE FOR ADJUSTING A BEAM DIRECTION OF A HEADLIGHT, AND MOTOR VEHICLE
PROCÉDÉ ET DISPOSITIF D'AJUSTAGE D'UNE DIRECTION DE RAYONNEMENT D'UN PHARE ET AUTOMOBILE

(30) Priorität: 02.03.2011 DE 102011012792
(43) Veröffentlichungstag der Anmeldung: 08.01.2014
(73) Patentinhaber: Audi AG, 85045 Ingolstadt (DE)
(72) Erfinder: FUNK, Christian, 85080 Gaimersheim (DE); SIEDERBECK, Alfons, 94560 Offenberg (DE)
(74) Vertreter: Thielmann, Frank
(86) Internationale Anmeldenummer: PCT/EP2012/000881
(87) Internationale Veröffentlichungsnummer: WO 2012/116813

(56) Entgegenhaltungen:
- DE-U1-202004 010 944
- JP-A- 4 244 437
- JP-A- 2009 220 623

## Beschreibung

Die Erfindung betrifft ein Verfahren zum Einstellen einer Abstrahlrichtung eines Scheinwerfers eines Fahrzeugs mit zumindest einem Vorderrad und zumindest einem Hinterrad. Die Erfindung betrifft auch eine Vorrichtung zur Einstellung einer Abstrahlrichtung eines Scheinwerfers eines Fahrzeugs. Schließlich betrifft die Erfindung einen Kraftwagen mit einer solchen Vorrichtung.

Bei Kraftfahrzeugen ist eine statische Ausleuchtung der Fahrbahn mittels Scheinwerfern üblich, bei der eine definierte Lichtverteilung fest vorgegeben ist. Diese ist üblicherweise asymmetrisch ausgeführt, so dass in Ländern mit Rechtsverkehr die Fahrzeugvorfeldbeleuchtung linksseitig um etwa 1% vertikal beschnitten ist. In der Regel ist ein Kompromiss für unterschiedliche Straßenklassen zu finden.

Daneben ist ein sogenanntes dynamisches Kurvenlicht bekannt, welches lenkwinkelbasiert aufgrund des Vorderachslenkwinkels die Lichtverteilung in die Kurveninnenseite schwenkt. Über geeignete Steuergeräte der Fahrzeugelektronik können erwartete Kurvenverläufe antizipiert werden, so dass der Schwenkwinkel der um ihre Horizontalachse verschwenkbaren Scheinwerfer frühzeitig auf die zu erwartende Straßensituation eingestellt werden kann. Hierbei wird zusätzlich die Geschwindigkeit des Kraftwagens berücksichtigt, da bei hohen Geschwindigkeiten die Auslenkung des Schwenkwinkels in der Regel verringert wird. Auch die Gierrate des Kraftwagens kann als Eingangsgröße für die Steuerung des Schwenkwinkels dienen. Das Verschwenken erfolgt normalerweise durch geeignete Schrittmotoren.

Aus der DE 20 2004 010 944 U1 ist ein Flurförderzeug mit mindestens einer Arbeitsbeleuchtungsvorrichtung bekannt, wobei mindestens eine Vorrichtung zur selbsttätigen Veränderung des Leuchtbereichs der Arbeitsbeleuchtungsvorrichtung in Abhängigkeit von geplanten und/oder vorgenommenen Fahrtrichtungsänderungen des Flurförderzeugs vorgesehen ist.

In der JP 2009 220623 A und der JP 4 244437 A ist jeweils eine Scheinwerfereinrichtung für ein Fahrzeug beschrieben, die ein Kurvenlicht in Abhängigkeit von einem Lenkwinkel und einer Hinterachslenkung steuert.

Es ist Aufgabe der Erfindung, ein Verfahren, eine Vorrichtung und einen Kraftwagen bereitzustellen, mithilfe derer die Abstrahlrichtung eines Scheinwerfers noch besser einer zu erwartenden Kurvenfahrt angepasst werden kann.

Diese Aufgabe wird durch die Gegenstände der unabhängigen Patentansprüche gelöst.

Das erfindungsgemäße Verfahren dient zum Einstellen einer Abstrahlrichtung eines Scheinwerfers eines Fahrzeugs mit zumindest einem Vorderrad und zumindest einem Hinterrad. Es umfasst die folgenden Schritte:
a) Erfassen eines Vorderradeinschlagwinkels des zumindest einen Vorderrads;
b) Erfassen eines Hinterradeinschlagwinkels des zumindest einen Hinterrads;
c) Festlegen einer Abstrahlrichtung des Scheinwerfers in Abhängigkeit des Vorderradeinschlagwinkels und des Hinterradeinschlagwinkels; und
d) Einstellen der Abstrahlrichtung des Scheinwerfers auf die festgelegte Abstrahlrichtung.

Unter dem Vorderradeinschlagwinkel ist insbesondere ein Auslenkwinkel eines Vorderrads des Fahrzeugs gegenüber einer festlegbaren Neutralstellung dieses Rads zu verstehen. Selbiges gilt für den Hinterradeinschlagwinkel bezüglich eines Hinterrads. Die jeweilige Neutralstellung ist dann insbesondere für eine Geradeausfahrt des Fahrzeugs definiert. Ein Radeinschlagwinkel wird üblicherweise zu einer Kurvenfahrt des Fahrzeugs führen. Der Vorderradeinschlagwinkel kann insbesondere durch eine Vorderachslenkung des Fahrzeugs eingestellt werden, während für die Einstellung des Hinterradeinschlagwinkels eine geeignete Hinterachslenkung am Fahrzeug vorgesehen sein kann. Der Scheinwerfer kann insbesondere so ausgebildet sein, dass er das Fahrzeugvorfeld in Fahrtrichtung des Fahrzeug beleuchtet. Für die Einstellung der Abstrahlrichtung des Scheinwerfers kann dieser insbesondere in Form eines sogenannten statischen oder dynamischen Kurvenlichts vorliegen. Insbesondere wird die Abstrahlrichtung des Scheinwerfers sowohl in Abhängigkeit des Vorderradseinschlagwinkels als auch in Abhängigkeit des Hinterradeinschlagwinkels, also nicht nur in Abhängigkeit eines der beiden Radeinschlagwinkel, festgelegt.

Das erfindungsgemäße Verfahren erlaubt es, die tatsächliche Abstrahlrichtung des Scheinwerfers noch besser auf eine zu erwartende Kurvenfahrt des Fahrzeugs einzustellen. Läge beispielsweise ein Hinterradeinschlagwinkel vor, würde die Abstrahlrichtung jedoch nur in Abhängigkeit eines Vorderradeinschlagwinkels eingestellt, so würde die Abstrahlrichtung des Scheinwerfers unzureichend genau eingestellt. Sowohl ein zu starkes Verstellen der Abstrahlrichtung wäre dann denkbar, was die Gefahr birgt, dass für den Führer des Fahrzeugs das Fahrzeugvorfeld nur unzureichend ausgeleuchtet wäre, oder dass andere Verkehrsteilnehmer geblendet würden. Ist die Abstrahlrichtung zu wenig verstellt, ist der Effekt eines dynamischen Kurvenlichts nur unzureichend ausgebildet und eine vorausliegende Kurve gegebenenfalls nur schlecht ausgeleuchtet. Durch eine sehr präzise und den tatsächlichen Verhältnissen angepasste Einstellung der Abstrahlrichtung ist stets eine sehr gute Ausleuchtung der Fahrzeugumgebung garantiert und die Verkehrssicherheit wird erheblich verbessert.

Vorzugsweise umfasst das Verfahren den zusätzlichen Schritt des Festlegens einer Vergleichsabstrahlrichtung des Scheinwerfers in Abhängigkeit des Vorderradeinschlagswinkels ohne Berücksichtigung des Hinterradeinschlagwinkels. Für den Fall, dass der Hinterradeinschlagwinkel und der Vorderradeinschlagwinkel zu einer jeweiligen Neutralstellung des zugehörigen Hinterrads bzw. Vorderrads in entgegengesetzte Richtungen orientiert sind, wird in Schritt c) die Abstrahlrichtung so festgelegt, dass sie gegenüber der Vergleichsabstrahlrichtung stärker in Richtung des Vorderradseinschlagwinkels orientiert ist. Dies beschreibt den Fall, dass Hinterrad und Vorderrad gegenüber einer insbesondere gemeinsamen Neutralstellung gegensinnig verschwenkt sind, so dass sich engere Kurvenradien realisieren lassen als wenn das Hinterrad in seiner Neutralstellung verbliebe und nur das Vorderrad um den selben Vorderradeinschlagwinkel verschwenkt würde. Dann ist auch die Abstrahlrichtung des Scheinwerfers stärker nachzuführen als es eigentlich dem Vorderradeinschlagwinkel entspricht. So kann die Abstrahlrichtung des Scheinwerfers besser an den tatsächlich eingestellten Kurvenradius angepasst werden.

Analog kann vorgesehen sein, dass für den Fall, dass der Hinterradeinschlagwinkel und der Vorderradeinschlagwinkel zu einer jeweiligen Neutralstellung des zugehörigen Hinterrads beziehungsweise Vorderrads in gleiche Richtungen orientiert sind, in Schritt c) die Abstrahlrichtung so festgelegt wird, dass sie gegenüber der Vergleichsabstrahlrichtung weniger stark in Richtung des Vorderradeinschlagwinkels orientiert ist. Dies beschreibt insbesondere den Fall, dass Vorderrad und Hinterrad gegenüber einer gemeinsamen Neutralstellung in die gleiche Schwenkrichtung verschwenkt sind, und insbesondere um den gleichen Winkel verschwenkt sind. In diesem Fall würde das Fahrzeug trotz verschwenkter Räder keine Kurve fahren, sondern sich gradlinig diagonal zur ursprünglichen Fahrtrichtung bewegen. Dann muss auch durch das Einstellen der Abstrahlrichtung des Scheinwerfers keine Kurve antizipiert werden, so dass ein geringeres Verstellen geboten ist als es dem eigentlichen Vorderradeinschlagwinkel entspricht.

Gemäß der Erfindung umfasst der Schritt c) folgende Teilschritte:
c1) Ermitteln eines Korrekturwerts aus dem Hinterradeinschlagwinkel;
c2) Ermitteln eines fiktiven Vorderradeinschlagwinkels aus dem Vorderradeinschlagwinkel und dem Korrekturwert. Insbesondere kann der Vorderradeinschlagwinkel über eine mathematische Beziehung oder eine Kennlinie der Gestalt mit dem Korrekturwert verknüpft werden, dass sich der fiktive Vorderradeinschlagwinkel ergibt; und
c3) Festlegen der Abstrahlrichtung des Scheinwerfers in Abhängigkeit des fiktiven Vorderradeinschlagwinkels.

Insbesondere kann ein Hinterachslenkwinkel als Korrekturwert eines Vorderachslenkwinkels zur Berechnung eines Schwenkwinkels für einen Abblendlichtkegel des Scheinwerfers betrachtet werden. Diese Ausführungsform erlaubt eine einfache und dennoch sehr effektive Festlegung der Abstrahlrichtung des Scheinwerfers.

Vorzugsweise umfasst das Verfahren den zusätzlichen Schritt des Bestimmens einer Fahrgeschwindigkeit des Fahrzeugs, wobei in Schritt c) das Festlegen der Abstrahlrichtung des Scheinwerfers zusätzlich in Abhängigkeit der Fahrgeschwindigkeit erfolgt. Diese Ausführungsform erlaubt es, die Abstrahlrichtung des Scheinwerfers der tatsächlichen Fahrsituation noch besser angepasst einzustellen. Bei hohen Fahrgeschwindigkeiten sind keine sehr geringen Kurvenradien zu erwarten, so dass die Abstrahlrichtung des Scheinwerfers nur geringfügig nachgeführt werden muss. Bei geringen Fahrgeschwindigkeiten lassen sich dagegen engere Kurven realisieren, so dass auch die Abstrahlrichtung des Scheinwerfers stärker geändert werden muss, um durch eine geeignete Ausleuchtung die zu erwartende Kurve zu antizipieren.

Vorzugsweise wird in Schritt c) zum Festlegen der Abstrahlrichtung des Scheinwerfers ein Schwenkwinkel des Scheinwerfers im Wesentlichen um eine Hochachse des Fahrzeugs festgelegt, und in Schritt d) der Scheinwerfer durch Verschwenken um den festgelegten Schwenkwinkel hinsichtlich seiner Abstrahlrichtung eingestellt. Insbesondere kann vorgesehen sein, dass der gesamte Scheinwerfer oder beispielsweise lediglich eine Scheinwerferlinse horizontal verschwenkt wird. Insbesondere kann vorgesehen sein, dass der Schwenkwinkel durch einen am Scheinwerfer angebrachten Schrittmotor verschwenkt wird. Das Verschwenken des Scheinwerfers erlaubt ein technisch einfach zu realisierendes als auch exaktes Einstellen der Abstrahlrichtung des Scheinwerfers.

Vorzugsweise kann in Schritt c) die Abstrahlrichtung des Scheinwerfers unter Zuhilfenahme eines Einspurmodells festgelegt werden. Insbesondere kann ein erweitertes Einspurmodell mit lenkender Hinterachse herangezogen werden, um einen korrekten Schwenkwinkel des Scheinwerfers zu berechnen. Einspurmodelle sind in der Kraftfahrzeugtechnik üblich, um das Lenkverhalten von zweispurigen Fahrzeugen zu modellieren. Die Berücksichtigung eines Hinterradeinschlagwinkels ist im Rahmen eines solchen Modells sehr einfach implementierbar und führt dennoch zu sehr exakten Voraussagen für einen Schwenkwinkel des Scheinwerfers.

Eine erfindungsgemäße Vorrichtung dient zur Einstellung einer Abstrahlrichtung eines Scheinwerfers eines Fahrzeugs mit zumindest einem Vorderrad und zumindest einem Hinterrad und umfasst:
- eine Erfassungseinheit, welche dazu ausgebildet ist, einen Vorderradeinschlagwinkel des zumindest einen Vorderrads zu erfassen;
- eine Recheneinheit, welche dazu ausgebildet ist, eine Abstrahlrichtung des Scheinwerfers in Abhängigkeit des Vorderradeinschlagwinkels festzulegen;
- eine Stelleinheit, welche dazu ausgebildet ist, die Abstrahlrichtung des Scheinwerfers auf die festgelegte Abstrahlrichtung einzustellen, wobei
- die Erfassungseinheit dazu ausgebildet ist, einen Hinterradeinschlagwinkel des zumindest einen Hinterrads zu erfassen; und
- die Recheneinheit dazu ausgebildet ist, die Abstrahlrichtung des Scheinwerfers in Abhängigkeit des Vorderradeinschlagwinkels und des Hinterradeinschlagwinkels gemäß einer Ausführungsform des erfindungsgemäßen Verfahrens festzulegen.

Die Erfassungseinheit kann insbesondere geeignete Schwenkwinkelerfassungssensoren umfassen, welche an dem Vorderrad bzw. Hinterrad oder einer Vorderachse bzw. Hinterachse angebracht sind und dazu ausgebildet sind, einen Vorderradeinschlagwinkel bzw. Hinterradeinschlagwinkel zu messen. Die Recheneinheit kann insbesondere von der Erfassungseinheit umfasst sein. In der Recheneinheit können insbesondere mathematische Beziehungen oder Kennlinien abgelegt sein, um die erfassten Vorderrad- bzw. Hinterradeinschlagwinkel mit einem Stellwinkel für die Abstrahlrichtung des Scheinwerfers in Beziehung zu setzen. Die Stelleinheit kann insbesondere als Aktor oder Schrittmotor ausgebildet sein.

Ein erfindungsgemäßer Kraftwagen umfasst eine erfindungsgemäße Vorrichtung.

Die mit Bezug auf das erfindungsgemäße Verfahren dargestellten bevorzugten Ausführungsformen und deren Vorteile gelten entsprechend für die erfindungsgemäße Vorrichtung sowie den erfindungsgemäßen Kraftwagen.

Anhand von Ausführungsbeispielen wird die Erfindung im Folgenden näher erläutert. Es zeigen:
- Fig. 1: Eine schematische Draufsicht auf einen Kraftwagen mit Vorderachs- und Hinterachslenkung sowie verschwenkbaren Scheinwerfern;
- Fig. 2: eine schematische Darstellung des Lenkverhaltens zweier Kraftwägen;
- Fig. 3: die Schwenkwinkeldifferenz eines schwenkbaren Scheinwerfers in Abhängigkeit von Geschwindigkeit und Kurvenradius;
- Fig. 4A: eine schematische Draufsicht auf einen Kraftwagen mit gegensinnig verschwenkten Vorder- und Hinterrädern; und
- Fig. 4B: eine schematische Draufsicht auf einen Kraftwagen mit gleichsinnig verschwenkten Vorder- und Hinterrädern.

In den Figuren sind gleiche oder funktionsgleiche Elemente mit den gleichen Bezugszeichen versehen.

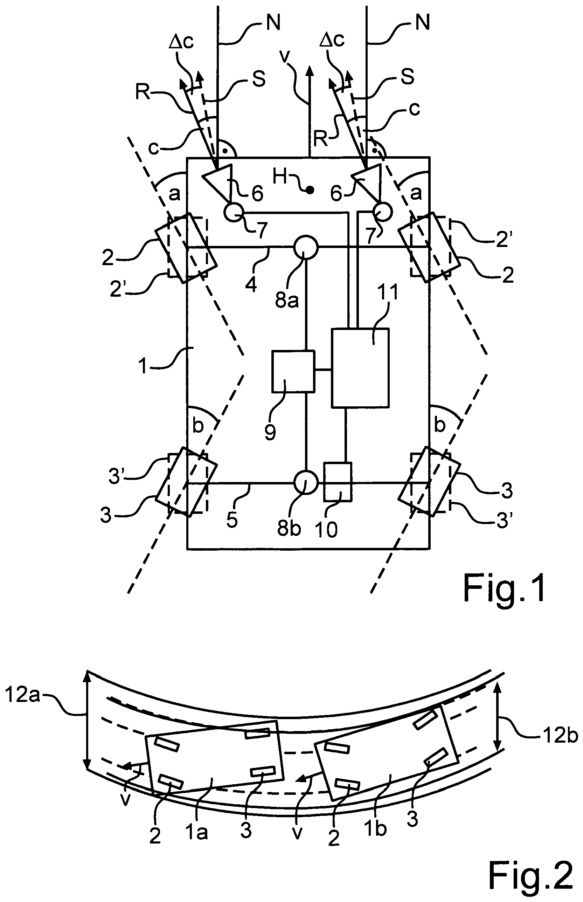

Fig. 1 zeigt einen Kraftwagen 1 mit einer Vorderachse 4 und einer Hinterachse 5. An der Vorderachse 4 befinden sich zwei Vorderräder 2, während sich an der Hinterachse 5 zwei Hinterräder 3 befinden. Der Kraftwagen 1 bewegt sich im Ausführungsbeispiel in Richtung des Geschwindigkeitsvektors v. Die Längsachse N des Kraftwagens 1 definiert eine Neutralstellung der Vorder- und Hinterräder 2 bzw. 3. Diese Neutralstellung ist durch die gestrichelt eingezeichneten Vorder- und Hinterräder 2' beziehungsweise 3' angedeutet.

Gegenüber dieser Neutralstellung nehmen die Vorderräder 2 einen Vorderradeinschlagwinkel a ein. Dieser Vorderradeinschlagwinkel a habe einen positiven Wert. Auch die Hinterräder 3 sind gegenüber der Neutralstellung verschwenkt, und zwar um einen Hinterradeinschlagwinkel b. Der Hinterradeinschlagwinkel b hat gegenüber dem Vorderradeinschlagwinkel a einen negativen Wert. Vorder- und Hinterräder 2 bzw. 3 sind also in entgegengesetzte Richtungen verschwenkt bzw. orientiert.

An der Vorderachse 4 und Hinterachse 5 sind Sensoren 8a bzw. 8b angebracht, mithilfe derer sich die Einschlagwinkel a bzw. b erfassen lassen. Für die Auswertung der Sensorsignale ist hierbei eine Erfassungseinheit 9 vorgesehen, welche wiederum mit einem Computer 11 verbunden ist. Der Computer 11 kann beispielsweise auch einen Elektromotor 10 ansteuern, mithilfe dessen sich die Hinterräder 3 verschwenken lassen.

Nach dem Stand der Technik kann der Computer 11 in Abhängigkeit des Vorderradeinschlagwinkels a einen Schwenkwinkel c für verschwenkbare Scheinwerfer 6 des Kraftwagens 1 berechnen. Die Abstrahlrichtung R der Scheinwerfer 6 kann dann über einen Schrittmotor 7 gemäß dem vom Computer 11 berechneten Schwenkwinkel c eingestellt werden. Der Schwenkwinkel c ist hierbei als Auslenkwinkel gegenüber der Längsachse N um die Hochachse H des Kraftwagens 1 definiert.

Bisher war es üblich, den Schwenkwinkel c ausschließlich in Abhängigkeit des Vorderradeinschlagwinkels a zu bestimmen. Wird dieses bekannte Verfahren im vorliegenden Fall ausgeführt, so erhält man eine Verschwenkung der Scheinwerfer 6 lediglich insoweit, als dass sich die Vergleichsabstrahlrichtung S ergibt. Da jedoch auch die Hinterräder 3 um den Hinterradeinschlagwinkel b eingeschlagen sind, ist diese Vergleichsabstrahlrichtung S für den tatsächlich eingestellten, sehr engen Kurvenradius nicht ausreichend. Deshalb wird nun zusätzlich vom Computer 11 der gemessene Hinterradeinschlagwinkel b berücksichtigt, um eine verbesserte Abstrahlrichtung R der Scheinwerfer 6 zu ermitteln. Aufgrund des zu erwartenden kleineren Kurvenradius wird die Abstrahlrichtung R gegenüber der Vergleichsabstrahlrichtung S in Richtung des Vorderradeinschlagwinkels a um die Schwenkwinkeldifferenz Δc nachgeführt, so dass sich insgesamt gegenüber der Längsachse N der Schwenkwinkel c ergibt.

Um in jeder Fahrsituation ein optimales Schwenkergebnis des Abblendlichtkegels durch die Scheinwerfer 6 zu erzielen, wird also der Hinterradeinschlagwinkel b der Hinterachslenkung des Kraftwagens 1 für die Berechnung des Schwenkwinkels c berücksichtigt. Dies erfolgt im Computer 11, welcher ein Lichtsteuergerät umfasst, welches über einen CAN-Bus mit der Erfassungseinheit 9 bzw. dem Sensor 8b verbunden ist.

In Fig. 2 ist die Situation nochmals verdeutlicht. Ein Kraftwagen 1a bewegt sich in Richtung des Geschwindigkeitsvektors v, ohne dass seine Hinterräder 3 gelenkt sind. Die Hinterräder 3 befinden sich also trotz eingeschlagener Vorderräder 2 weiterhin in einer Neutralstellung. Der Kraftwagen 1a bewegt sich folglich in einer Kurve innerhalb der Grenze 12a.

Der Kraftwagen 1b hat dagegen die Hinterachslenkung aktiviert, so dass die Hinterräder 3 gegenüber den Vorderrädern 2 gegensinnig verschwenkt sind. Hierdurch lassen sich kleinere Kurvenradien realisieren und der Kraftwagen 1b bewegt sich innerhalb der Grenze 12b. Für den Kraftwagen 1b sollte deshalb ein anderer Schwenkwinkel c eingestellt werden als für den Kraftwagen 1a. Würde jedoch lediglich der für die Kraftwägen 1a und 1b identische Vorderradeinschlagwinkel a berücksichtig, so würde sich für beide Kraftwägen der identische Schwenkwinkel c ergeben, welcher jedoch für den Fall des Kraftwagens 1b unzureichend genau wäre.

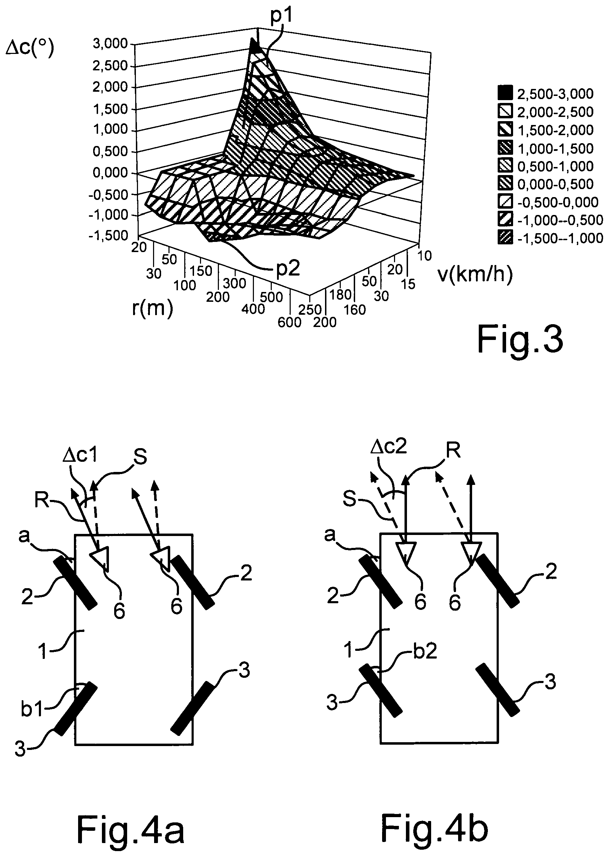

Es wird deshalb im Computer 11 eine Kennkurve gemäß Fig. 3 bereitgestellt. Aufgetragen ist die Schwenkwinkeldifferenz Δc der Abstrahlrichtung R gegenüber der Vergleichsabstrahlrichtung S in Abhängigkeit eines Kurvenradius r und in Abhängigkeit der Fahrzeuggeschwindigkeit v. Es seien zwei Punkte P1 und P2 innerhalb dieser Kennkurve anhand der Fig. 4A und 4B diskutiert.

Fig. 4A korrespondiert zu Punkt P1 in Fig. 3. Fig. 4A zeigt den Fall, dass der Hinterradeinschlagwinkel b1 und der Vorderradeinschlagwinkel a zur jeweiligen Neutralstellung des zugehörigen Hinterrads 3 bzw. Vorderrads 2 in entgegengesetzte Richtungen orientiert sind. Der Vorderradeinschlagwinkel a hat einen positiven Wert, während der Hinterradeinschlagwinkel b1 einen negativen Wert besitzt. In diesem Fall ergibt sich ein sehr kleiner Kurvenradius r. Zudem muss aus fahrdynamischen Gründen bei diesem geringen Kurvenradius r die Geschwindigkeit v angemessen klein sein. Würde für das Verschwenken der Scheinwerfer 6 lediglich der Vorderradeinschlagwinkel a berücksichtigt, ergäbe sich die Vergleichsabstrahlrichtung S. Diese korrespondiert jedoch zu einem zu großen Kurvenradius r. Folglich muss die Abstrahlrichtung R so festgelegt werden, dass sie gegenüber der Vergleichsabstrahlrichtung S stärker in Richtung des Vorderradeinschlagwinkels a orientiert ist. Deshalb wird eine zusätzliche Schwenkwinkeldifferenz Δc1 in Abhängigkeit des Hinterradeinschlagwinkels b1 festgelegt. Wie man der Fig. 3 entnimmt beträgt diese Schwenkwinkeldifferenz Δc1 etwa +2,5°.

Fig. 4B korrespondiert dagegen zu Punkt P2 in Fig. 3. Fig. 4B zeigt den Fall, dass der Hinterradeinschlagwinkel b2 und der Vorderradeinschlagwinkel a zur jeweiligen Neutralstellung des zugehörigen Hinterrads 3 bzw. Vorderrads 2 in gleiche Richtungen orientiert sind. Diese Stellung der Hinterräder 3 ist insbesondere bei schneller Autobahnfahrt des Kraftwagens 1 vorteilhaft, wenn von einer Spur auf eine andere Spur gewechselt werden soll. Es wird ein sehr großer Kurvenradius r realisiert und der Kraftwagen 1 gleitet nahezu querbeschleunigungsfrei von einer Fahrspur auf die andere, wobei sich für die Fahrzeuginsassen ein sehr angenehmes Fahrgefühl einstellt. In diesem Fall sind sowohl der Vorderradeinschlagwinkel a als auch der Hinterradeinschlagwinkel b2 positiv. Würde nur der Vorderradeinschlagwinkel a für das über die Scheinwerfer 6 realisierte dynamische Kurvenlicht berücksichtigt, ergäbe sich die Vergleichsabstrahlrichtung S. In diesem Fall ist jedoch ein so starkes Verschwenken der Scheinwerfer 6 überhaupt nicht erforderlich. Unter Berücksichtigung des Hinterradeinschlagwinkels b2 wird deshalb vom Computer 11 eine Schwenkwinkeldifferenz Δc2 berechnet, um für die tatsächliche Abstrahlrichtung R einen Korrekturwert gegenüber der Vergleichsabstrahlrichtung S zu erhalten. Die Schwenkwinkeldifferenz Δc2 besitzt hier einen negativen Wert und beträgt etwa -1,3° wie man Fig. 3 entnimmt.

Durch Berücksichtigung des Hinterachslenkwinkels kann bei gleich und gegensinnigem Lenkverhalten der Vorder- und Hinterachse der Abblendlichtkegel in die Bewegungsrichtung des Kraftfahrzeugs korrekt eingestellt werden. Bei Verbau einer Hinterachslenkung und gleichzeitig ausschließlicher Berücksichtigung des Lenkradwinkels der Vorderachse würde dagegen der Scheinwerfer 6 in die falsche Richtung oder zuwenig stark geschwenkt.

## Patentansprüche

1. Verfahren zum Einstellen einer Abstrahlrichtung (R) eines Scheinwerfers (6) eines Fahrzeugs (1) mit zumindest einem Vorderrad (2) und zumindest einem Hinterrad (3), mit den Schritten:
a) Erfassen eines Vorderradeinschlagwinkels (a) des zumindest einen Vorderrads (2);
b) Erfassen eines Hinterradeinschlagwinkels (b) des zumindest einen Hinterrads (3);
c) Festlegen einer Abstrahlrichtung (R) des Scheinwerfers (6) in Abhängigkeit des Vorderradeinschlagwinkels (a) und des Hinterradeinschlagwinkels (b), und
d) Einstellen der Abstrahlrichtung (R) des Scheinwerfers (6) auf die festgelegte Abstrahlrichtung (R),
wobei Schritt c) folgende Teilschritte umfasst:
c1) Ermitteln eines Korrekturwerts aus dem Hinterradeinschlagwinkel (b);
c2) Ermitteln eines fiktiven Vorderradeinschlagwinkels aus dem Vorderradeinschlagwinkel (a) und dem Korrekturwert; und
c3) Festlegen der Abstrahlrichtung (R) des Scheinwerfers (6) in Abhängigkeit des fiktiven Vorderradeinschlagwinkels.

2. Verfahren nach Anspruch 1,
**gekennzeichnet durch** den Schritt
a1) Festlegen einer Vergleichsabstrahlrichtung (S) des Scheinwerfers in Abhängigkeit des Vorderradeinschlagwinkels (a) ohne Berücksichtigung des Hinterradeinschlagwinkels (b), wobei
- für den Fall, dass der Hinterradeinschlagwinkel (b1) und der Vorderradeinschlagwinkel (a) zu einer jeweiligen Neutralstellung des zugehörigen Hinterrads (3') bzw. Vorderrads (2') in entgegengesetzte Richtungen orientiert sind, in Schritt c) die Abstrahlrichtung (R) so festegelegt wird, dass sie gegenüber der Vergleichsabstrahlrichtung (S) stärker in Richtung des Vorderradeinschlagwinkels (a) orientiert ist (Δc1); und/oder
- für den Fall, dass der Hinterradeinschlagwinkel (b2) und der Vorderradeinschlagwinkel (a) zu einer jeweiligen Neutralstellung des zugehörigen Hinterrads (3') bzw. Vorderrads (2') in gleiche Richtungen orientiert sind, in Schritt c) die Abstrahlrichtung (R) so festegelegt wird, dass sie gegenüber der Vergleichsabstrahlrichtung (S) weniger stark in Richtung des Vorderradeinschlagwinkels (a) orientiert ist (Δc2).

3. Verfahren nach einem der vorhergehenden Ansprüche,
**gekennzeichnet durch** den Schritt
b1) Bestimmen einer Fahrgeschwindigkeit (v) des Fahrzeugs (1); wobei in Schritt c) das Festlegen der Abstrahlrichtung (R) des Scheinwerfers (6) zusätzlich in Abhängigkeit der Fahrgeschwindigkeit (v) erfolgt.

4. Verfahren nach einem der vorhergehenden Ansprüche,
**dadurch gekennzeichnet, dass**
in Schritt c) zum Festlegen der Abstrahlrichtung (R) des Scheinwerfers (6) ein Schwenkwinkel (c) des Scheinwerfers (6) im Wesentlichen um eine Hochachse (H) des Fahrzeugs festgelegt wird, und in Schritt d) der Scheinwerfer (6) durch Verschwenken um den festgelegten Schwenkwinkel (c) hinsichtlich seiner Abstrahlrichtung (R) eingestellt wird.

5. Verfahren nach einem der vorhergehenden Ansprüche,
**dadurch gekennzeichnet, dass**
in Schritt c) die Abstrahlrichtung (R) des Scheinwerfers (6) unter Zuhilfenahme eines Einspurmodells festgelegt wird.

6. Vorrichtung zur Einstellung einer Abstrahlrichtung (R) eines Scheinwerfers (6) eines Fahrzeugs (1) mit zumindest einem Vorderrad (2) und zumindest einem Hinterrad (3), wobei die Vorrichtung umfasst:
- eine Erfassungseinheit (9), welche dazu ausgebildet ist, einen Vorderradeinschlagwinkel (a) des zumindest einen Vorderrads (2) zu erfassen;
- eine Recheneinheit (11), welche dazu ausgebildet ist, eine Abstrahlrichtung (R) des Scheinwerfers (6) in Abhängigkeit des Vorderradeinschlagwinkels (a) festzulegen; und
- eine Stelleinheit (7), welche dazu ausgebildet ist, die Abstrahlrichtung (R) des Scheinwerfers (6) auf die festgelegte Abstrahlrichtung (R) einzustellen,
**dadurch gekennzeichnet, dass**
- die Erfassungseinheit (9) dazu ausgebildet ist, einen Hinterradeinschlagwinkel (b) des zumindest einen Hinderrads (3) zu erfassen; und
- die Recheneinheit (11) dazu ausgebildet ist, die Abstrahlrichtung (R) des Scheinwerfers (6) in Abhängigkeit des Vorderradeinschlagwinkels (a) und des Hinterradeinschlagwinkels (b) nach einem Verfahren gemäß einem der vorhergehenden Ansprüche festzulegen.

7. Kraftwagen (1) mit einer Vorrichtung nach Anspruch 6.

## Claims

1. Method for adjusting a beam direction (R) of a headlight (6) of a vehicle (1) having at least one front wheel (2) and at least one rear wheel (3), comprising the steps:
a) detection of a front-wheel steering angle (a) of the at least one front wheel (2);
b) detection of a rear-wheel steering angle (b) of the at least one rear wheel (3);
c) defining a beam direction (R) of the headlight (6) depending on the front-wheel steering angle (a) and the rear-wheel steering angle (b), and
d) adjusting the beam direction (R) of the headlight (6) to the defined beam direction (R),
wherein step c) comprises the following sub-steps:
c1) determining a correction value from the rear-wheel steering angle (b);
c2) determining a fictitious front-wheel steering angle from the front-wheel steering angle (a) and the correction value; and
c3) defining the beam direction (R) of the headlight (6) depending on the fictitious front-wheel steering angle.

2. Method according to claim 1,
**characterised by** the step
a1) defining of a comparison beam direction (S) of the headlight depending on the front-wheel steering angle (a) without taking into consideration the rear-wheel steering angle (b), wherein
- in the event that the rear-wheel steering angle (b1) and the front-wheel steering angle (a) are oriented in opposite directions in relation to a respective neutral position of the associated rear wheel (3') or front wheel (2') the beam direction (R) is defined in step c), such that it is oriented (Δc1) more strongly in the direction of the front-wheel steering angle (a) in relation to the comparison beam direction (S); and/or
- in the event that the rear-wheel steering angle (b2) and the front-wheel steering angle (a) are oriented in identical directions in relation to a respective neutral position of the associated rear wheel (3') or front wheel (2') the beam direction (R) is defined in step c), such that it is oriented (Δc2) less strongly in the direction of the front wheel steering angle (a) in relation to the comparison beam direction (S).

3. Method according to any one of the preceding claims,
**characterised by** the step
b1) determining of a travel speed (v) of the vehicle (1); wherein in step c) the beam direction (R) of the headlight (6) is defined additionally depending on the travel speed (v).

4. Method according to any one of the preceding claims,
**characterised in that**
in step c) a pivot angle (c) of the headlight (6) is defined essentially about a vertical axis (H) of the vehicle for the defining of the beam direction (R) of the headlight (6), and in step d) the headlight (6) is adjusted in respect of its beam direction (R) through pivoting about the defined pivot angle (c).

5. Method according to any one of the preceding claims,
**characterised in that**
in step c) the beam direction (R) of the headlight (6) is defined with the assistance of a single-track model.

6. Device for adjusting a beam direction (R) of a headlight (6) of a vehicle (1) having at least one front wheel (2) and at least one rear wheel (3), wherein the device comprises:
- a detection unit (9), which is configured to detect a front-wheel steering angle (a) of the at least one front wheel (2);
- a computing unit (11), which is configured to define a beam direction (R) of the headlight (6) depending on the front-wheel steering angle (a); and
- an actuating unit (7), which is configured to adjust the beam direction (R) of the headlight (6) to the defined beam direction (R),
**characterised in that**
- the detection unit (9) is configured to detect a rear-wheel steering angle (b) of the at least one rear wheel (3); and
- the computing unit (11) is configured to define the beam direction (R) of the headlight (6) depending on the front-wheel steering angle (a) and the rear-wheel steering angle (b) according to a method according to any one of the preceding claims.

7. Motor vehicle (1) having a device according to claim 6.

## Revendications

1. Procédé de réglage d'une direction de rayonnement (R) d'un phare (6) d'un véhicule (1) avec au moins une roue avant (2) et au moins une roue arrière (3), avec les étapes de :
a) détection d'un angle de braquage de roue avant (a) de l'au moins une roue avant (2) ;
b) détection d'un angle de braquage de roue arrière (b) de l'au moins une roue arrière (3) ;
c) fixation d'une direction de rayonnement (R) du phare (6) en fonction de l'angle de braquage de roue avant (a) et de l'angle de braquage de roue arrière (b), et
d) réglage de la direction de rayonnement (R) du phare (6) sur la direction de rayonnement (R) fixée,
dans lequel l'étape c) comprend les étapes partielles suivantes :
c1) détermination d'une valeur de correction à partir de l'angle de braquage de roue arrière (b) ;
c2) détermination d'un angle de braquage de roue avant fictif à partir de l'angle de braquage de roue avant (a) et de la valeur de correction ; et
c3) fixation de la direction de rayonnement (R) du phare (6) en fonction de l'angle de braquage de roue avant fictif.

2. Procédé selon la revendication 1,
**caractérisé par** l'étape de
a1) fixation d'une direction de rayonnement de comparaison (S) du phare en fonction de l'angle de braquage de roue avant (a) sans tenir compte de l'angle de braquage de roue arrière (b), dans lequel
- pour le cas où l'angle de braquage de roue arrière (b1) et l'angle de braquage de roue avant (a) sont orientés en une position neutre respective de la roue arrière (3') ou roue avant (2') correspondante dans des directions opposées, dans l'étape c) la direction de rayonnement (R) est fixée de sorte qu'elle est orientée davantage en direction de l'angle de braquage de roue avant (a) par rapport à la direction de rayonnement de comparaison (S) (Δc1) ; et/ou
- pour le cas où l'angle de braquage de roue arrière (b2) et l'angle de braquage de roue avant (a) sont orientés en une position neutre respective de la roue arrière (3') ou roue avant (2') correspondante dans les mêmes directions, dans l'étape c) la direction de rayonnement (R) est fixée de sorte qu'elle est moins orientée en direction de l'angle de braquage de roue avant (a) par rapport à la direction de rayonnement de comparaison (S) (Δc2).

3. Procédé selon l'une quelconque des revendications précédentes,
**caractérisé par** l'étape de
b1) détermination d'une vitesse de déplacement (v) du véhicule (1) ; dans lequel dans l'étape c) la fixation de la direction de rayonnement (R) du phare (6) a lieu en plus en fonction de la vitesse de déplacement (v).

4. Procédé selon l'une quelconque des revendications précédentes,
**caractérisé en ce que**
dans l'étape c) pour la fixation de la direction de rayonnement (R) du phare (6) un angle de pivotement (c) du phare (6) est fixé sensiblement autour de l'axe vertical (H) du véhicule, et dans l'étape d) le phare (6) est réglé en ce qui concerne sa direction de rayonnement (R) par pivotement autour de l'angle de pivotement (c) fixé.

5. Procédé selon l'une quelconque des revendications précédentes,
**caractérisé en ce que**
dans l'étape c) la direction de rayonnement (R) du phare (6) est fixée à l'aide d'un modèle une voie.

6. Dispositif de réglage d'une direction de rayonnement (R) d'un phare (6) d'un véhicule (1) avec au moins une roue avant (2) et au moins une roue arrière (3), dans lequel le dispositif comprend :
- une unité de détection (9), laquelle est réalisée pour détecter un angle de braquage de roue avant (a) de l'au moins une roue avant (2) ;
- une unité de calcul (11), laquelle est réalisée pour fixer une direction de rayonnement (R) du phare (6) en fonction de l'angle de braquage de roue avant (a) ; et
- une unité de réglage (7), laquelle est réalisée pour régler la direction de rayonnement (R) du phare (6) sur la direction de rayonnement (R) fixée,
**caractérisé en ce que**
- l'unité de détection (9) est réalisée pour détecter un angle de braquage de roue arrière (b) de l'au moins une roue arrière (3) ; et
- l'unité de calcul (11) est réalisée pour fixer la direction de rayonnement (R) du phare (6) en fonction de l'angle de braquage de roue avant (a) et de l'angle de braquage de roue arrière (b) selon un procédé selon l'une quelconque des revendications précédentes.

7. Véhicule (1) avec un dispositif selon la revendication 6.
